# EUROPEAN PATENT SPECIFICATION

(11) **EP 3 604 833 B1**
(45) Date of publication and mention of the grant of the patent: **11.12.2024**
(21) Application number: 19196258.8
(22) Date of filing: 31.10.2017
(51) Int. Cl.: F16B 33/06

(54) **FASTENERS HAVING ENHANCED ELECTRICAL ENERGY DISPERSION PROPERTIES**
BEFESTIGUNGSMITTEL MIT VERBESSERTEN EIGENSCHAFTEN DER VERTEILUNG VON ELEKTRISCHER ENERGIE
DISPOSITIFS DE FIXATION AYANT DES PROPRIÉTÉS DE DISPERSION D'ÉNERGIE ÉLECTRIQUE AMÉLIORÉES

(30) Priority: 11.11.2016 US 201615349122; 08.12.2016 NL 2017955
(43) Date of publication of application: 05.02.2020
(62) Divisional of application: 19152747.2
(73) Proprietor: The Boeing Company, Arlington, VA 22202 (US)
(72) Inventor: SISCO, Tanni, Chicago, IL 60606-1596 (US); RUFIN, Antonio Carlos, Chicago, IL 60606-1596 (US); TANNER, Richard B., Chicago, IL 60606-1596 (US); WINTER, Dale, Chicago, IL 60606-1596 (US); WILKERSON, Jeffrey Alan, Chicago, IL 60606-1596 (US); HEETER, Joe, Chicago, IL 60606-1596 (US)
(74) Representative: Duxbury, Stephen

(56) References cited:
- EP-A1- 2 615 314
- EP-B1- 2 615 314
- WO-A1-2016/050791
- US-A1- 2015 147 136
- US-A1- 2016 169 262

## Description

### FIELD

The disclosure relates to the field of fasteners, and in particular, to fasteners that disperse electrical energy.

### BACKGROUND

Fasteners are used in the aerospace industry to mechanically unite various structural components of an aircraft. For example, composite or metal panels that form a portion of a skin of an aircraft wing may be joined to one another via a fastener. In aircraft structures, it is often desirable to install fasteners in interference, meaning that the fastener diameter is larger than the diameter of the hole that receives it. Interference-fit installation of fasteners can facilitate aircraft assembly operations and improve joint performance. As fasteners are intended to enhance the structural strength of an aircraft, it remains desirable to ensure that the act of installing a fastener does not damage underlying structural components of the aircraft. In particular, if an interference-fit fastener is forced through a composite part with too much force, it may cause the composite part to delaminate or experience other issues. Thus, an interference fit fastener may utilize a lubricant that reduces the amount of force used to drive the fastener during installation. Excessive force may also result in damage to the fastener and, in joints comprised of metal and composite parts, it can additionally result in detrimental galling, scoring or excessive deformation of the metal parts. The magnitude of the fastener insertion force may be controlled by the application of lubricants to the fastener or to the hole, by limiting the amount of interference, or by using means other than driving or pulling the fastener into the hole to create the desired state of interference.

Although structural strength of a fastener is important to consider, it is also important for fasteners to adequately conduct and/or disperse electrical energy from the surrounding structure. Hence, it remains important for the fastener to efficiently disperse electrical energy to surrounding structural components in a manner that prevents energy from building at the fastener.

While both structural strength and electrical compatibility remain desirable, it is a complicated process to balance both of these requirements when designing a fastener. For example, a fastener may be coated in order to enhance lubricity and therefore reduce the amount of force used to install the fastener. However, coatings, and/or finishes may electrically insulate the fastener from its surroundings, thereby confounding the ability of the fastener to adequately dissipate electrical energy. As another example, using fasteners sheathed in a protective metal sleeve may provide an adequate level of energy dissipation and reduce the possibility of damaging composite parts during fastener installation. However, such fasteners can be generally costly.

For at least these reasons, designers continue to seek out fastener designs that strike a balance in fulfilling both structural and electrical design constraints.

The prior art includes US 2013/183119 A1, which discloses a screw, whereby the underside of the screw head is provided with recesses- pockets- which are filled with lubricant. When the screw is tightened onto a joint, lubricant is released from the pockets in order to prevent wear and tear during multiple loosenings and tightenings. US 2013/183119 A1 is not an interference fit fastener.

WO 2016/050791 A1 in accordance with its abstract states a metallic fastener for assembly by interference fit of at least two structural elements comprising a through drilling, the fastener comprising an enlarged head , a shaft having an external diameter before installation that is greater than an internal diameter of the bore, said shaft comprising a conductive surface. Before installation, at least one conductive surface is covered with a lubricating layer having sufficient adherence to prevent its abrasion by manual manipulation of the fastener and sufficiently weak to be at least partially torn from the conductive surface during mounting by interference fit of the fastener, a mixture of at least one polyolefin and one polytetrafluoroethylene for example.

US 2016/169262 A2 A1, in accordance with its abstract states a metal attachment for providing an electrically conductive surface through the entire thickness of structural elements to be assembled. The attachment thereby comprises a head and a smooth shank extending along an axis of revolution, characterized in that the shank comprising at least one conductive portion and one lubricating portion disposed along the axis of revolution of the attachment along at least one length of the shank.

### SUMMARY

The present disclosure concerns the application of irregular (e.g., speckled/spattered) coatings, for example metal pigmentation coatings onto fasteners in regions where the fasteners will be installed into a hole in a state of interference. For example, the fasteners may comprise pull-type lock bolts that include a shank dimensioned for an interference fit with structural components of an aircraft. The surface of the fastener may be bare, or may be coated partially or in its entirety with a finish (e.g., anodize, or a finish formed from bare metal via grit blasting etc.). Additionally, a portion of the fastener is coated in an irregular (i.e., unpatterned) high-lubricity coating, such as a metal pigmentation coating and/or a dry film lubricant coating, such that the coating is randomly interspersed with regions of bare (or finished) metal. In this manner, application of the coating enhances lubricity without substantially compromising electrical conductivity of the fastener. This is because remaining exposed regions not covered by the coating (e.g., regions of bare or anodized metal) provide desired levels of electrical energy dispersion at the fastener surface discontinuously along the entire circumference (i.e., all 360º) of the fastener.

In particular the present disclosure provides a method for providing a fastener for use in the aerospace or similar industry, the method comprising the steps of:
providing a fastener comprising:
   a head,
   a cylindrical shank that extends from the head and is dimensioned to engage in a fit with a corresponding hole,
   which cylindrical shank has a surface and,
spraying, with a sprayer, a coating in a non-uniform, discontinuous manner onto the fastener in order to leave irregular portions of the surface of the shank exposed and free of coating, and also in order to leave irregular portions of the surface of the shank covered in coating,
wherein the coating exhibits a higher lubricity than the surface of the shank so that the irregular, coating covered portions of the surface of the shank exhibit a higher lubricity than the irregular portions of the surface of the shank exposed and free of coating and,
wherein the coating exhibits a higher dielectric withstand voltage than the surface of the shank so that charge dissipates via the irregular portions of the surface of the shank exposed and free of coating before the dielectric withstand voltage of the coating, of the irregular, covered portions of the surface of the shank is met,
wherein the pressure, time of exposure and/or orifice size for the sprayer is adjusted in order to adjust the percentage covering of surface area of the shank covered by coating as a matter of design choice.

The coating preferably comprises an Al or Cu metal pigment coating and/ or a molybdenum disulfide coating.

The surface of the shank may be anodized prior to spraying the coating over the shank.

A lubricant may be applied that covers the shank which lubricant is applied after the coating has been applied, which lubricant is preferably not fused, baked, or otherwise firmly adhered onto/or integral with the fastener and which lubricant can act as a sacrificial lubricant during installation of the fastener and which lubricant preferably comprises cetyl alcohol.

The step of coating spraying also preferably sprays coating onto a circumference of the fastener head

Applying the coating may increase a width of the shank by less than 0.0254 cm (one hundredth of an inch) and the radius of the coated shank is greater than the radius of the non-coated shank.

The coating sprayer is preferably calibrated to adjust the size of individual spots or speckles of coating sprayed onto the fastener wherein for example the sprayer is calibrated to spray spots of coating that are between approximately one tenth and one thousandth the circumference of the fastener.

The pressure, time of exposure and/or orifice size for the sprayer can be adjusted in order to adjust the percentage covering of surface area of the shank covered by coating as a matter of design choice to preferably between 30% and 70%.

The disclosure further specifically relates to a fastener, as preferably provided by this method, for use in the aerospace or similar industry, the fastener comprising:
a head;
a cylindrical shank that extends from the head and is dimensioned to engage in a fit with a corresponding hole; which cylindrical shank has a smooth surface and a diameter,
a coating wherein the coating is applied in a non-uniform, discontinuous manner to the fastener to thereby leave the surface of the shank with irregular portions exposed and free of coating, and also to thereby leave the surface of the shank with irregular portions covered in coating,
whereby the coating increases the diameter of the shank and forms peaks on the smooth surface of the shank, wherein the coating exhibits a higher lubricity than the surface of the shank so that the irregular, coating covered portions of the surface of the shank exhibit a higher lubricity than the irregular portions of the surface of the shank exposed and free of coating and,
wherein the coating exhibits a higher dielectric withstand voltage than the surface of the shank so that charge dissipates via the irregular portions of the surface of the shank exposed and free of coating before the dielectric withstand voltage of the coating covering the irregular, coating covered portions of the surface of the shank is met.

The surface of the shank preferably comprises a finish, for example an anodized surface.

The shank is preferably made of a material selected from the group consisting of titanium, ferrous alloy, and nickel alloy.

The coating may comprise an Al or Cu metal pigment coating and/or a molybdenum disulfide coating.

The fastener can further comprise a lubricant covering the shank and the coating, which lubricant is preferably not firmly adhered to the fastener so that the lubricant acts as a sacrificial lubricant during installation of the fastener and which lubricant preferably comprises cetyl alcohol.

The coating is also preferably in the non-uniform, discontinuous manner to the fastener head during spraying, to thereby leave the fastener head with irregular portions exposed and free of coating and also to thereby leave the fastener head with irregular portions covered in coating, preferably wherein areas of the fastener head that are not in contact with the hole after installation are not coated.

The coating can increase a width of the shank by less than 0.0254 cm (one hundredth of an inch).

The radius of the coated shank can be greater than the radius of the non-coated shank.

The coating preferably covers between 30% and 70% of a surface area of the shank.

The fastener is also preferably unmasked.

The disclosure also comprises the following:
A fastener for use in the aerospace or similar industry, the fastener comprising:
a head;
a cylindrical shank that extends from the head and is dimensioned to engage in a fit with a corresponding hole; and
a discontinuously speckled coating, wherein,
the coating exhibits a higher lubricity than a surface of the shank, and wherein
the coating exhibits a higher dielectric withstand voltage than the surface of the shank. The fastener may have one or more of the following:
   the coating forms an unpatterned mosaic,
   the coating leaves irregular, randomly shaped portions of the shank exposed,
   the shank is dimensioned to engage in an interference fit with the hole.

The fastener can further comprise a lead-in transition that extends from the shank, and
the lead-in transition can exhibit a gradually varying diameter that changes from being equal to a diameter of the shank to being less than the diameter of the shank.

The fastener may comprise
a pull-type lock bolt or a stump-type lock bolt.

The surface of the shank may comprise a finish, for example an anodized surface or bare metal.

The shank can be made of a material selected from the group consisting of titanium, ferrous alloy, and nickel alloy.

The fastener may further comprise a lubricant covering the shank and the coating, which lubricant preferably comprises cetyl alcohol, and which lubricant is not firmly adhered to the fastener so that the lubricant acts as a sacrificial lubricant during installation of the fastener.

The coating can be discontinuously speckled over an entire circumference of the shank.

The coating may cover between thirty and seventy percent of a surface area of the shank.

The coating can discontinuously cover a circumference of the head.

The head can comprise a hexagonal female slot.

Coverage of the surface by the coating can increase a width of the shank by less than 0.0254 cm (one hundredth of an inch).

The coating can be fused to the shank.

A percentage of surface area of the shank covered by the coating can remain constant as the circumference of the shank is traversed.

The coating can be a high-lubricity coating.

The coating may comprise a metal pigment coating and/or a dry film lubricant.

The coating may comprise an Al or Cu metal pigment coating and/or a molybdenum disulfide coating.

The fastener can further comprise a removable pintail, which pintail may be replaceable by a swagable collar, and/or where the fastener may be unmasked.

The disclosure also includes an aircraft comprising this fastener.

A method for providing a fastener speckled with a coating, the speckled fastener for use in the aerospace or similar industry, comprising:
providing a fastener comprising a head and a cylindrical shank that extends from the head and applying a speckled coating to the fastener in such a way as to leave irregular portions of a surface of the shank exposed and uncovered by the coating, which coating exhibits a higher lubricity than the surface of the shank and wherein the coating exhibits a higher dielectric withstand voltage than the surface of the shank.

Applying the coating can comprise forming an unpatterned mosaic.

Applying the coating can comprise:
determining a desired amount of surface area of the shank to be covered by the coating;
adjusting a sprayer based on the desired amount of surface area; and speckling the coating over the surface via the sprayer.

Applying the coating can comprise spattering the coating over the surface.

The coating can be speckled discontinuously around an entire circumference of the shank.

The coating can comprise an Al or Cu metal pigment coating and/ or a molybdenum disulfide coating.

Applying the coating can comprise speckling the coating over a portion of the shank dimensioned for an interference fit with a hole.

The surface of the shank can be anodized prior to speckling the coating over the shank.

The coating can comprise discontinuously covering bare metal of the shank. heating the coating can be heated prior to application.

The method can further comprise applying a lubricant that covers the shank, which lubricant preferably comprises cetyl alcohol, and which lubricant is preferably applied after the coating has been applied, which lubricant is not fused, baked, or otherwise firmly adhered onto/integral with the fastener, and which acts as a sacrificial lubricant during installation of the fastener.

The irregular portions of the surface of the shank exposed and uncovered by the coating can be randomly shaped.

Applying the coating may comprise covering between thirty and seventy percent of the surface area of the shank.

The method can further comprise applying the coating over a circumference of the head.

Applying the coating can increase a width of the shank by less than 0.0254 cm (one hundredth of an inch).

The coating can be firmly adhered to the shank for example by way of fusing or baking.

Applying the coating may comprise maintaining a constant percentage of surface area of the shank covered by the coating as the circumference of the shank is traversed.

Applying the coating may be carried out to fully cover an entire circumference of a lead-in transition of the fastener.

The disclosure also includes a method, preferably for fastening aircraft components together, comprising:
forming a fit between the fastener and a hole by driving a shank of the fastener into the hole,
building up electrical energy between the shank and the hole,
traversing the electrical energy around the coating; and
dissipating the electrical energy at irregular portions of the shank that are not covered by the coating, along the entire circumference of the shank.

The fit can be an interference fit formed by selecting the fastener as having a diameter larger than the hole and placing the fastener into the hole.

The pintail can be broken off of the fastener after forming the fit and providing a securement on the fastener, preferably by way of swaging a collar onto the fastener at a location where the pintail was broken off or by threading a nut onto threads of the fastener.

The hole can be a hole in a skin of an aircraft.

The hole can be at a fuel tank of an aircraft.

The shank can be held in the hole to prevent rotation of the shank during installation of a nut.

Driving the shank into the hole can comprise shearing the coating.

Dissipating the electrical energy between the hole and the fastener can comprise transferring current through the shank at locations on the shank that are anodized.

The disclosure also includes an aircraft fastener obtainable according to this method.

The disclosure also includes a method for providing a fastener for use in the aerospace or similar industry, the method comprising the steps of:
providing a fastener comprising:
a head,
a cylindrical shank that extends from the head and is dimensioned to engage in a fit with a corresponding hole,
which cylindrical shank has a surface and,
spraying, with a sprayer, a coating in a non-uniform, discontinuous manner onto the fastener in order to leave irregular, portions of the surface of the shank exposed and free of coating, and also in order to leave irregular portions of the surface of the shank speckled with coating, wherein
the coating exhibits a higher lubricity than the surface of the shank so that the irregular, coating covered portions of the surface of the shank exhibit a higher lubricity than the irregular portions of the surface of the shank exposed and free of coating and,
wherein the coating exhibits a higher dielectric withstand voltage than the surface of the shank so that charge dissipates via the irregular portions of the surface of the shank exposed and free of coating before the dielectric withstand voltage of the coating, of the irregular, covered portions of the surface of the shank is met,
wherein the sprayer is calibrated to adjust the size of individual speckles of coating sprayed onto the fastener and wherein the pressure, time of exposure and/or orifice size for the sprayer is adjusted in order to adjust the percentage covering of surface area of the shank covered by coating as a matter of design choice between 30% and 70%.

The disclosure also includes a method for providing a fastener for use in the aerospace or similar industry, the method comprising the steps of:
providing a fastener comprising:
a head,
a cylindrical shank that extends from the head and is dimensioned to engage in a fit with a corresponding hole,
which cylindrical shank has a surface and,
applying a coating in a non-uniform, discontinuous manner onto the fastener in order to leave irregular portions of the surface of the shank exposed and free of coating, and also in order to leave irregular portions of the surface of the shank covered in coating,
wherein the coating exhibits a higher lubricity than the surface of the shank so that the irregular, coating covered portions of the surface of the shank exhibit a higher lubricity than the irregular portions of the surface of the shank exposed and free of coating and,
wherein the coating exhibits a higher dielectric withstand voltage than the surface of the shank so that charge dissipates via the irregular portions of the surface of the shank exposed and free of coating before the dielectric withstand voltage of the coating, of the irregular, covered portions of the surface of the shank is met.

The disclosure also includes a method for providing a fastener for use in the aerospace or similar industry, the method comprising the steps of:
providing a fastener comprising:
a head,
a cylindrical shank that extends from the head and is dimensioned to engage in a fit with a corresponding hole,
which cylindrical shank has a surface and,
applying a coating in a non-uniform, discontinuous manner onto the fastener in order to leave irregular portions of the surface of the shank exposed and free of coating, and also in order to leave irregular portions of the surface of the shank covered in coating,
wherein the coating exhibits a higher lubricity than the surface of the shank so that the irregular, coating covered portions of the surface of the shank exhibit a higher lubricity than the irregular portions of the surface of the shank exposed and free of coating and,
wherein the coating exhibits a higher dielectric withstand voltage than the surface of the shank so that charge dissipates via the irregular portions of the surface of the shank exposed and free of coating before the dielectric withstand voltage of the coating, of the irregular, covered portions of the surface of the shank is met,
whereby the step of spraying the coating onto the fastener is carried out without masking the fastener.

Other aspects (e.g., methods and computer-readable media relating to the disclosure) may be described below. The features, functions, and advantages that have been discussed can be achieved independently in various embodiments or may be combined in yet other embodiments further details of which can be seen with reference to the following description and drawings.

### DESCRIPTION OF THE DRAWINGS

The present disclosure is now described, by way of example only, and with reference to the accompanying drawings. The same reference number represents the same element or the same type of element on all drawings.
FIG. 1 is a diagram of an aircraft.
FIG. 2 is a cut-through view of a section of skin of a wing including fasteners according to the present disclosure.
FIG. 3 is a zoomed-in view of a fastener according to the present disclosure.
FIG. 4A-4B are additional views of fasteners according to the present disclosure.
FIG. 5 is a zoomed in view of a discontinuous coating applied to a fastener according to the present disclosure.
FIG. 6 is a zoomed in view of a smeared discontinuous coating at an installed fastener according to the present disclosure.
FIG. 7 is a flowchart illustrating a method for fabricating a fastener according to the present disclosure.
FIG. 8 is a flowchart illustrating a method for installing a fastener according to the present disclosure.
FIG. 9 is a flowchart illustrating a method for exchanging electrical energy between a fastener and hole according to the present disclosure.
FIG. 10 is a block diagram of a fastener according to the present disclosure.
FIG. 11 is a flow diagram of aircraft production and service methodology according to the present disclosure.
FIG. 12 is a block diagram of an aircraft according to the present disclosure.

### DESCRIPTION

The figures and the following description illustrate the present disclosure.

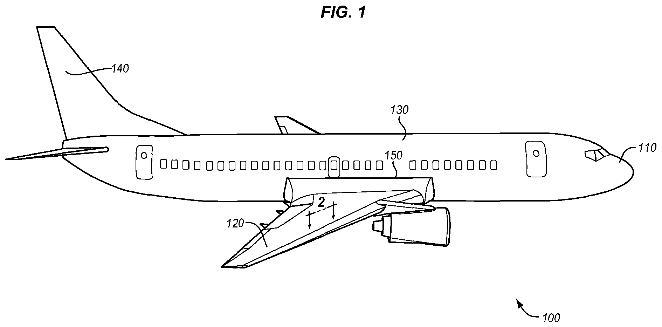

FIG. 1 illustrates the structure of an exemplary aircraft that may utilize fasteners according to the present disclosure. Specifically, FIG. 1 is a diagram of an aircraft 100. Aircraft 100 includes nose 110, wings 120, fuselage 130, and tail 140.

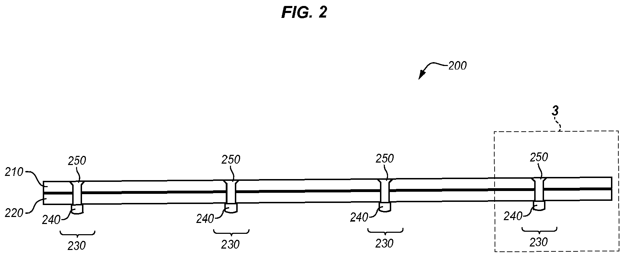

FIG. 2 is a cut-through view of a section of wing skin 200 of aircraft 100 indicated by view arrows 2 in FIG. 1. As shown in FIG. 2, wing skin 200 comprises multiple composite or metal parts (210, 220), which include holes 230. Fasteners 250 are driven through holes 230 (e.g., to form an interference fit), and are secured with securements 240 (e.g., swaged-on collars or threaded nuts). Securements 240 may be swaged onto fasteners 250 at locations where pintails have been broken off of fasteners 250. Fasteners 250 may comprise pull-type lock bolts, stump-type lock bolts, HI-LOK brand pins, or any other type of permanent pin-type fastener.

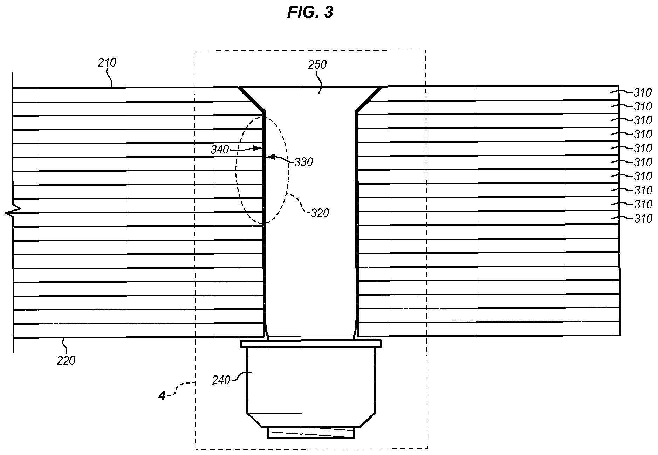

FIG. 3 is a zoomed-in view of a fastener 250 that attaches parts (210, 220) forming a section of skin 200. FIG. 3 corresponds with region 3 of FIG. 2. FIG. 3 illustrates that each part may comprise a composite part including one or more layers/plies 310 (e.g., carbon fiber within a cured matrix of resin). In further examples, parts 210 and 220 are metal. FIG. 3 further illustrates that within region 320, fastener 250 is placed into an interference fit with part 210. Although an interference fit is achieved, small air gaps (not shown) may still remain at certain locations between fastener 250 and part 210. These air gaps are caused by surface irregularities that may occur when drilling holes in composite materials. These small air gaps in turn insulate small portions of fastener 250 from composite part 210. Fastener 250 may further include a coating that provides corrosion protection and enhanced lubricity. The coating may facilitate the installation of fastener 250, but may also electrically insulate fastener 250 from composite parts 210 and 220. Ideally, the level of insulation is low enough so as to ensure a low dielectric withstand voltage, thereby ensuring that no substantial electrical arcing occurs between wall 330 of fastener 250, and wall 340 of composite part 210 in the event of an electrical discharge through region 320. While FIG. 3 illustrates fastener 250 being used for a composite-composite joint, fastener 250 may also be used for a metal-composite joint, or any suitable location.

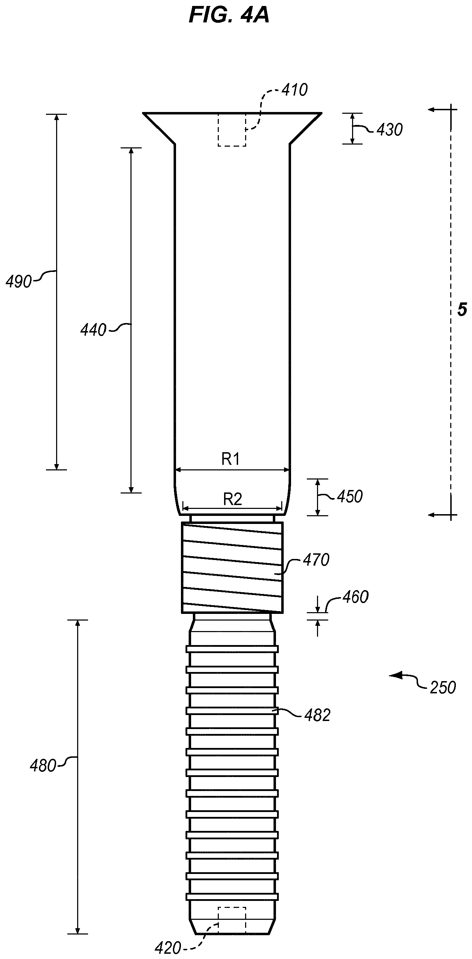

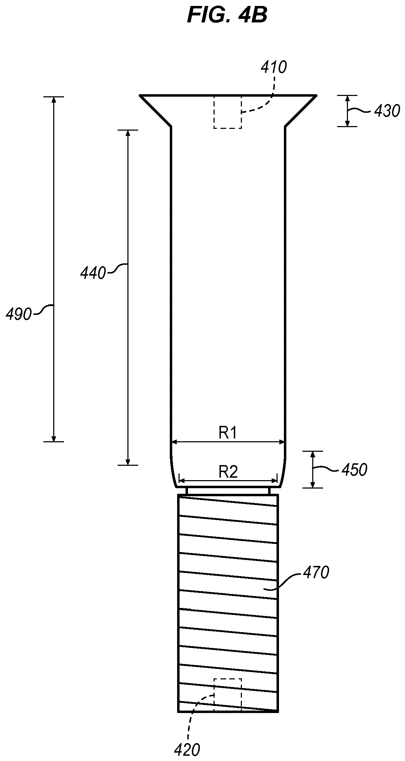

FIG. 4A is an additional view of fastener 250 and corresponds with region 4 of FIG. 3. FIG. 4A illustrates a lock bolt configuration that is designed for installation with a swaged metallic collar (not shown). Fastener 250 further includes head 430, shank 440, lead-in transition 450, break groove 460, feature 470, and pintail 480 (including feature 482. Feature 470 and/or feature 482 can be annular shapes (e.g., rings), such that fastener 250 is forced into place by directly pushing fastener 250 into hole 230. Features 470 and/or 482 can be threaded. FIG. 4B illustrates a fastener 250 implemented as a threaded fastener, including slots 410 and 420 (e.g., hexagonal female slots, prismatic "star drive"/TORX slots, or other suitable slots that facilitate installation of fastener 250 into hole 230). Feature 470 can comprise threads designed to accommodate a threaded collar or nut (not shown). FIGS. 4A-4B further illustrate coating coverage area 490, where a high-lubricity coating (e.g., a metal pigment coating or dry film lubricant) is applied in a non-uniform discontinuous manner to fastener 250. Areas of fastener 250 other than the head 430 and shank 440 may be fully coated with high-lubricity coatings in order to facilitate fastener installation.

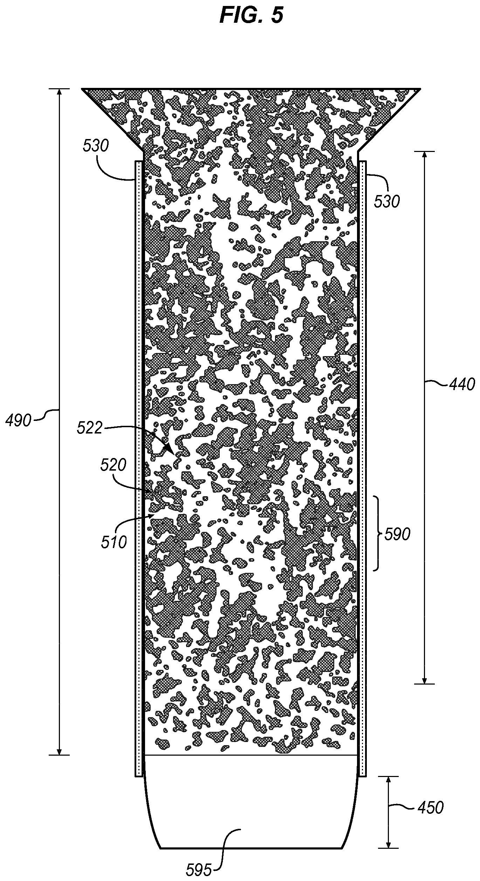

FIG. 5 is a close-up view of coating coverage area 490 of fastener 250 of FIGS. 4A and 4B. Specifically, FIG. 5 illustrates that coating 510 (e.g., an Al or Cu metal pigment coating, a coating of dry-film lubricant such as molybdenum disulfide, etc.) may be discontinuously applied within area 490. The coating coverage area 490 may encompass the bearing portion of the fastener, including fastener head 430and shank 440, stopping at fastener lead-in transition 450. The surface of coating coverage area 490 may comprise bare metal (e.g., titanium or a ferrous or nickel-base alloy having enhanced properties of electrical conduction) or a finish (e.g., anodize). FIG. 5 illustrates regions 522 of the coating coverage area 490 where some of the original surface/finish 520 of fastener 250 remains visible after application of the high-lubricity coating. Areas of fastener head 430 that are not in contact with hole 230 after installation need not receive coating 510.

Coating 510 beneficially increases the lubricity (and/or corrosion resistance) of fastener 250 when compared with commonly used fastener finishes or bare metal. As coating 510 is applied on the surface 520 of shank 440, a majority of sliding friction force endured by fastener 250 during installation is borne by coating 510. Fortunately, the portions of shank 440 covered by coating 510 are among the regions of the fastener 250 needing the highest amount of lubricity during fastener insertion into hole 230 for an installed state of interference. Hence, shank 440 may slide into hole 230 along its most lubricious portions, reducing the amount of force involved in installing fastener 250.

While coating 510 provides the above-noted benefits relating to fastener installation, coating 510 may not provide sufficient conductivity to ensure that fastener 250 properly dissipates electrical energy. For example, a coating 510 formed from metal pigment coating may have a dielectric withstand voltage in the range of zero to two thousand volts, as compared with anodized metal having a dielectric withstand voltage in the range of zero to sixty volts, or some other intrinsically low voltage. This means that a uniform metal pigment coating on shank 440 would cause shank 440 to experience high voltage discharges of electrical energy (e.g., discharges of about two thousand volts), which is undesirable. Hence, although coating 510 is desirable to ensure compatibility with structural design constraints, coating 510 exacerbates issues pertaining to electrical constraints because it exhibits less than a desired level of electrical energy conduction.

To address this issue, instead of uniformly coating the entirety of fastener 250 (or shank 440 and head 430) with coating 510, or applying solid regions (e.g., stripes) of coating 510 to fastener 250, shank 440 and/or head 430 are discontinuously coated in an irregular, non-uniform and/or unpatterned mosaic 590 application of coating 510. This technique is beneficial in that it eliminates any need to mask fastener 250 (e.g., in order to apply solid stripes or strips of coating 510), which removes a step involved in the fabrication of fasteners 250 and therefore reduces cost. Furthermore, this technique balances concerns related to electrical and structural design constraints.

US 2016/0169262 A1 discloses a metal screw for interference fits in composite materials for aircraft, which fastener is provided with regularly alternating, separate electrically conductive strips and lubricating strips.

US 2015/0147136 A1 discloses a fixing member for securing aircraft elements together, which fixing member is provided with separate strips of electrically conductive layers and lubricating layers made of different materials.

An additional benefit exists in the use of a non-uniform coating. Specifically, coating 510 may be applied via spraying to form a speckled/spattered film on head 430 and/or shank 440. As used herein, a speckled/spattered arrangement comprises a random distribution of coating across the entire perimeter of head 430 and/or shank 440. By adjusting a pressure, time of exposure, and/or orifice size for the sprayer, a percentage of surface area in area 490 covered by coating 510 may be carefully adjusted. This enables the electrical and physical properties of fastener 250 to be adjusted as desired. For example, the percentage of surface area of shank 440 (and/or head 430) covered by coating 510 may be varied as a matter of design choice to between thirty and seventy percent. The percentage may even vary along the axial length of fastener 250. The percentage area of coating 510 may be increased for fasteners that would otherwise require high amounts of force to install (e.g., fasteners having long grip lengths/axial lengths for shanks 440, or fasteners having shanks with larger diameters). In contrast, the percentage area of coating 510 may be decreased for fasteners that are exposed to higher electrical currents and where fastener 250 insertion force requirements may be less demanding.

The percentage area of coating 510 on shank 440 may also vary depending on whether or not surface 520 features a finish (e.g., anodize) or is bare metal. If surface 520 is bare metal, more coating 510 may be allowed while still conforming with electrical constraints, but more coating 510 may also be needed to ensure that the amount of force used to overcome friction with laminate plies does not exceed a predefined amount. As noted above, if fastener 250 is driven with too much force, it may damage underlying structural components (e.g., by delaminating those components in the region around hole 230 and causing ply separation). In a similar fashion, if surface 520 is anodized, less coating 510 may be allowed to conform with structural constraints, but less coating 510 may also be needed to ensure sufficient dispersion of electrical energy.

In addition to coating 510, an optional lubricant 530 is shown. Lubricant 530 is applied to fastener 250 (e.g., via a dip or spray). Lubricant 530 is applied after coating 510 is speckled on. Furthermore, lubricant 530 may be applied to shank 440 or the entirety of fastener 250. However, lubricant 530 differs substantially from coating 510 in that lubricant 530 is not fused, baked, or otherwise firmly adhered onto/integral with fastener 250. Instead, lubricant 530 comprises a traditional lubricant (e.g., an oil, cetyl alcohol, wax, sealant etc.) which acts as a sacrificial lubricant during installation. That is, the majority of lubricant 530 is rubbed away/off or otherwise dissipated during installation, and hence the insulating properties of lubricant 530 do not substantially impact the electrical properties of fastener 250. Since the installation of fastener 250 involves an interference fit, lubricant 530 alone (e.g., without coating 510) is insufficient to ensure that the driving force applied to fastener 250 will be below a desired threshold level of friction. Specifically, the interference contact involved in an interference fit ensures that lubricant 530 will be scraped off during installation, meaning that coating 510 defines in large degree the amount of installation force used for fastener 250. Hence, lubricant 530 may be considered an optional complement to coating 510, but does not replace the role of coating 510. FIG. 5 further illustrates an additional and/or alternative coating/finish that may be applied to lead-in portion/transition 450. Coating 510 may further continue into region 595, including lead-in transition 450. A different high-lubricity coating may be utilized in region 595 than coating 510. The coverage of region 595 by coating 510 may be complete (e.g., as shown) in order to fully cover the circumference of lead-in transition 450. In another embodiment, the coverage may be speckled in a similar manner as described above for shank 440.

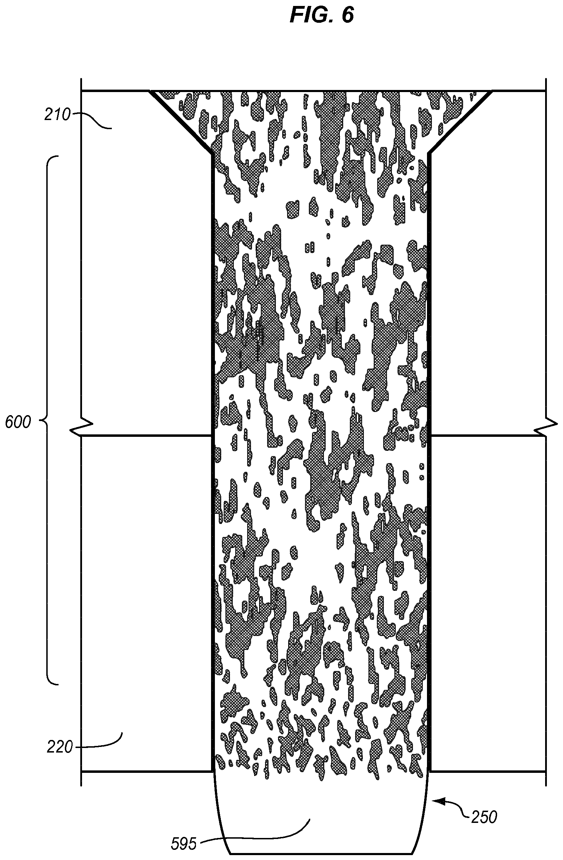

FIG. 6 illustrates a further view of fastener 250 after fastener 250 has been installed at skin 200 of aircraft 100. As shown in FIG. 6, the force of installing fastener 250 (by forcing fastener 250 in direction D into a hole of a smaller diameter has caused portions of coating 510 to shear, resulting in coating 510 having a smeared appearance 600. This alters the arrangement of coating 510 on fastener 250, but does not substantially change the amount of surface area occupied by coating 510. For the purposes of discussion, notes regarding a desired percentage of surface area occupied by coating 510 are directed towards the amount of surface area occupied by coating 510 prior to installation.

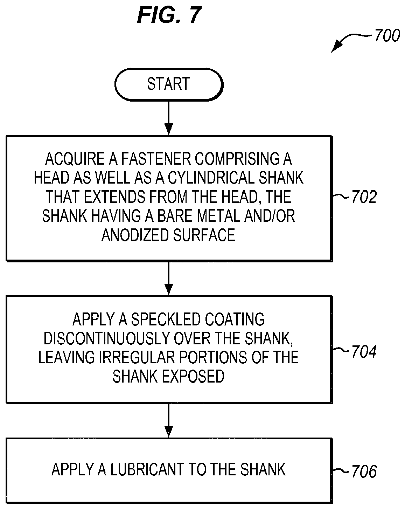

Illustrative details of the fabrication and operation of fastener 250 will be discussed with regard to FIGS. 7-8.

FIG. 7 is a flowchart illustrating a method 700 for fabricating a fastener 250 in an exemplary embodiment. The steps of method 700 are described with reference to fastener 250 of FIG. 1, but those skilled in the art will appreciate that method 700 may be performed for other fasteners (e.g., bolts, screws, rivets, etc.) in order to achieve a desired result. The steps of the flowcharts described herein are not all inclusive and may include other steps not shown. The steps described herein may also be performed in an alternative order.

According to method 700, fastener 250 is acquired, including head 430 and cylindrical shank 440 (step 702). Shank 440 includes surface 520, which may be bare metal or anodized metal. In one embodiment, fastener 250 may be forged from a titanium, ferrous alloy, or nickel alloy form, or may be machined from a precursor part. Alternatively, fastener 250 may be acquired from a supplier that manufactures fasteners in volume. The fastener 250 may furthermore comprise a finish over part of, or the entirety of its surface.

A high lubricity coating 510 is speckled over shank 440 (step 704). Coating 510 may further be applied to head 430 in a similar manner. Coating 510 is discontinuously applied (e.g. speckled) over irregular (e.g., randomly shaped) portions of head 430 and/or shank 440, and leaving irregular portions of shank 440 exposed. This forms an unpatterned mosaic of spattered/speckled coverage arrangement across the surface of shank 440 (e.g., across the entire circumference of shank 440 and/or the entire circumference of head 430, and extending axially), ensuring that a desired percentage of the surface area of shank 440 is covered by coating 510. As discussed above, coating 510 enhances the lubricity of shank 440, reducing the amount of effort used in installing shank 440 in an interference fit into hole 230. This in turn helps in overcoming interference fit friction. However, if coating 510 were applied across the entirety of shank 440 in a manner that completely covered the entire surface of shank 440, coating 510 would be electrically insulated from parts 210 and 220, resulting in diminished capability of fastener 250 to disperse electrical energy.

Applying coating 510 in a non-uniform, irregular manner (e.g., an unpatterned manner) provides a further and seemingly paradoxical benefit in that coating 510 remains, on average, evenly distributed along the entire circumference of shank 440, even though the specific regions occupied by coating 510 are random. In this manner, no portion of the circumference of shank 440 (e.g., 30º, 60º, 90º, 120º, etc.) has a substantially different ratio of coating 510 to exposed surface 520 (e.g., the ratio of these components remains substantially the same/constant as the circumference is traversed, such as within ten percent of a desired value). Thus, unlike a "striped" pattern of application for coating 510 along the circumference of fastener 250, which would necessarily cause uncoated regions to experience greater local amounts of friction (and therefore higher risk of damage) during insertion, fastener 250 includes a more uniform lubricity (on an area-by-area basis). Fastener 250 therefore achieves better lubricity than striped fasteners, and the cost of manufacture is less than that for striped fasteners, which require masking. Furthermore, unlike a striped system, electrical current does not have to flow past large solid coated areas/stripes at fastener 250 in order to reach a region where dissipation of electrical energy may occur. Hence, fastener 250 exhibits more uniform/better electrical energy dissipation capability (e.g., dielectric withstand voltages) along its circumference (on average) than striped fasteners. Coating 510 marginally increases the width/diameter of fastener 250. Accordingly the radius of the coated shank is therefore also greater than the radius of the non-coated shank.

For example, coating 510 may increase the width of fastener 250 by several thousandths of an inch (i.e., less than one hundredth of an inch). This means that the diameter of the coated fastener is not consistent as the coating is not consistent. However, the added thickness has no substantial impact on installation. The coating 510 increases the diameter of the shank, so that the coating 510 extends beyond the surface of the shank at the exposed, irregular portions of the shank free of coating. As such, the coating 510 creates peaks which project from and extend away from the surface of the shank. The shank is not polished after application of the coating. Coating 510 may consist of a high-lubricity metal-pigmented organic material or a dry-film lubricant. Coating 510 may be thermally processed (e.g., cured) after application to ensure that coating 510 is heat-fused to shank 440 and is not rubbed off or otherwise perturbed (except for example when shank 440 is fit into hole 230). In one embodiment, speckling comprises physically spattering coating 510 over shank 440. This means that no masking is needed.

With coating 510 successfully applied, lubricant 530 (e.g., cetyl alcohol) is applied to fastener 250 (step 706). For example, fastener 250 may be dipped and/or uniformly sprayed with lubricant 530 (i.e., saturated, resulting in no irregularities in coverage) in order to cover fastener 250. In embodiments where lubricant 530 is cetyl alcohol, lubricant 530 may be sacrificial in nature, rubbing off during the installation of fastener 250, and thereby ensuring minimal interference with (e.g., insulation of) the conductivity of shank 440.

Method 700 may be performed via batch processes of forming, machining, spraying, and/or dipping in order to ensure sufficient throughput of fasteners 250 for aircraft manufacturing. Since no masking is required (e.g., since fastener 250 is not masked and then sprayed with solid stripes of continuous coating 510), the amount of labor and time involved in the manufacture of fasteners 250 is reduced.

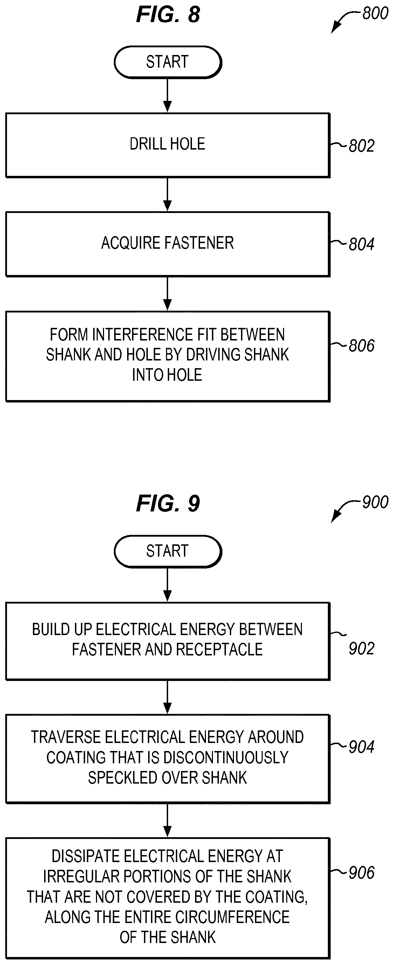

With fasteners 250 successfully fabricated, an aircraft manufacturer may desire to install fasteners 250 on an aircraft (e.g., aircraft 100). To this end, FIG. 8 is a flowchart illustrating a method 800 for installing a fastener 250 using a semi-automated or manual assembly process in an exemplary embodiment. According to method 800, a hole of a predetermined diameter is drilled into an aircraft (e.g., by an automated machine in accordance with a Numerical Control (NC) program, by a technician, etc.) (step 802). A fastener 250 is acquired by the machine having an appropriate diameter and grip length (step 804). The diameter may be chosen such that it is larger (e.g., by several thousandths of an inch) than the hole. This may be performed, for example, by loading a fastener (or batch of fasteners) into a fastener insertion machine (not shown). The fastener insertion machine may consist of a machine end effector that may operate according to a Numerical Control (NC) program implemented by a controller/processor in order to select a hole 230 into which to install fastener 250. In one embodiment, hole 230 is located at a fuel tank of an aircraft. The diameter of the hole 230 is sized such that when fastener 250 is installed, a prescribed level of interference is attained within tolerance. With a hole 230 chosen, the fastener insertion machine forms an interference fit between shank 440 and hole 230, by driving/inserting shank 440 into hole 230 (step 806). This operation may be performed by torqueing shank 440 into hole 230 via feature 470 (e.g., threading), or by directly forcing shank 440 into place. Shank 440 may be held in hole 230 after insertion to prevent rotation. This may be performed for example during installation of a securement 240 (e.g., a nut) onto fastener 250. After a number of fasteners 250 have been installed in this manner, an operator then follows by installing collars or nuts using hand-held or automated tools as desired. In all cases, since shank 440 is partially covered with coating 510, the lubricity of shank 440 is enhanced, reducing the amount of installation force used. With shank 440 in place in an interference fit, fastener 250 performs its role of fastening desired structural components (e.g., composite or metal parts that each form a portion of skin 200). Steps 802-806 may be repeated multiple times (e.g., hundreds or thousands of times) during the manufacturing of aircraft 100, in order to fasten the various components of aircraft 100. Upon aircraft 100 being fully manufactured, it may then be operated in flight.

Methods 700-800 utilize fasteners that exhibit an advantage over prior coated fastener systems in that fasteners 250 ensures that structural requirements of lubricity are met, while also ensuring that fasteners 250 safely dissipate electrical energy. Compared to fasteners sheathed in metallic sleeves, another system sometimes used in similar applications, methods 700-800 provide a one piece fastener at much lower cost.

EP 2 947 015 A1 discloses a modified shank fastener, the object of which is to do away with the need for extra sleeves provided between the fastener and the hole in a composite joint, for dissipating electrical/lightning strike energy. The shank disclosed in EP 2 947 015 A1 is provided with a roughened surface, formed by knurling/machining, which roughened surface is then provided with a dry lubricant coating. The knurled shank is then polished to remove coating from the knurl peaks, but to leave a regular coating in the knurl valleys. The coating and the knurl peaks are evened out to be level with each other on the polished surface of the shank fastener, whereby the peaks are removed.

The disclosure also relates to a method for fastening aircraft components together, comprising forming a fit between a fastener and a hole by driving a shank of the fastener into the hole, which fastener comprises a head, a cylindrical shank that extends from the head and is dimensioned to engage in a fit with a corresponding hole, which cylindrical shank has a surface, a diameter, a circumference, a coating wherein the coating is applied in a non-uniform, discontinuous manner to the fastener to thereby leave the surface of the shank with irregular portions exposed and free of coating, and also to thereby leave the surface of the shank with irregular portions covered in coating. The coating increases the diameter of the shank and forms peaks on the surface of the shank. The coating exhibits a higher lubricity than the surface of the shank so that the irregular, coating covered portions of the surface of the shank exhibit a higher lubricity than the irregular portions of the surface of the shank exposed and free of coating. The coating exhibits a higher dielectric withstand voltage than the surface of the shank so that charge dissipates via the irregular portions of the surface of the shank exposed and free of coating before the dielectric withstand voltage of the coating covering the irregular, coating covered portions of the surface of the shank is met.

The pressure, time of exposure and/or orifice size for the sprayer is adjusted in order to adjust the percentage covering of surface area of the shank covered by coating as a matter of design choice.

Electrical energy is built up between the shank and the hole.

The electrical energy is traversed around the coating and
the electrical energy is dissipated at the irregular portions of the shank that are not covered by the coating, along the entire circumference of the shank.

The fit can be an interference fit formed by selecting the fastener as having a diameter larger than the hole and placing the fastener into the hole.

The fastener can further comprise a removable pintail which is preferably broken off the fastener after forming the fit to provide a securement on the fastener and preferably further comprises swaging a collar onto the fastener at a location where the pintail was broken off.

A nut can be thread onto threads of the fastener.

The hole can be a hole in a skin of an aircraft, for example the hole at a fuel tank of an aircraft.

The shank can be held in the hole to prevent rotation of the shank during installation of a nut.

The coating can be sheared on driving the shank into the hole.

The surface of the shank can be anodized prior to spraying the coating over the shank.

Dissipating the electrical energy between the hole and the fastener may comprise transferring current through the shank at the anodized locations on the shank.

The shank can be made of a material selected from the group consisting of Titanium, ferrous alloy, and nickel alloy.

The coating can comprise an Al or Cu metal pigment coating and/or a molybdenum disulfide coating.

The fastener can further comprise a lubricant covering the shank and the coating, which lubricant is not firmly adhered to the fastener so that the lubricant acts as a sacrificial lubricant during installation of the fastener, which lubricant preferably comprises cetyl alcohol.

The disclosure also relates to an aircraft comprising a fastener which fastener comprises a head and a cylindrical shank that extends from the head and is dimensioned to engage in a fit with a corresponding hole.

The cylindrical shank has a surface, a diameter, a circumference, and a coating applied in a non-uniform, discontinuous manner to the fastener to thereby leave the surface of the shank with irregular portions exposed and free of coating, and also to leave the surface of the shank with irregular portions covered in coating whereby the coating increases the diameter of the shank and forms peaks on the surface of the shank.

Thee coating exhibits a higher lubricity than the surface of the shank so that the irregular, coating covered portions of the surface of the shank exhibit a higher lubricity than the irregular portions of the surface of the shank exposed and free of coating.

The coating also exhibits a higher dielectric withstand voltage than the surface of the shank so that charge dissipates via the irregular portions of the surface of the shank exposed and free of coating before the dielectric withstand voltage of the coating covering the irregular, coating covered portions of the surface of the shank is met.

The disclosure also related to a first aircraft component fastened to a second aircraft component by a fastener.

The fastener comprises a head, a cylindrical shank that extends from the head and which is dimensioned to engage in a fit with a corresponding hole.

The cylindrical shank has a surface, a diameter, a circumference, and a coating.

The coating is applied in a non-uniform, discontinuous manner to the fastener to leave the surface of the shank with irregular portions exposed and free of coating, and also to leave the surface of the shank with irregular portions covered in coating.

The coating increases the diameter of the shank and forms peaks on the surface of the shank.

The coating exhibits a higher lubricity than the surface of the shank so that the irregular, coating covered portions of the surface of the shank exhibit a higher lubricity than the irregular portions of the surface of the shank exposed and free of coating.

The coating exhibits a higher dielectric withstand voltage than the surface of the shank so that charge dissipates via the irregular portions of the surface of the shank exposed and free of coating before the dielectric withstand voltage of the coating covering the irregular, coating covered portions of the surface of the shank (440) is met.

With fasteners 250 installed, operation of the aircraft 100 (e.g., during flight) may cause electrical energy to build at fastener 250. This energy may be the result of a lightning strike. This built-up charge continues to accumulate until it overcomes the dielectric withstand voltage of surface 520, at which point electrical energy between hole 230 and fastener 250 is dissipated at locations on surface 520 When energy is dissipated at fastener 250, dissipation occurs between exposed portions of surface 520 and hole 230, and not between coating 510 and hole 230. Coating 510 may possess a higher dielectric withstand voltage than surface 520. Charge may therefore dissipate via surface 520 before the dielectric withstand voltage of coating 510 is met. This operation is beneficial, as dissipating charge through the relatively large area of surface 520 prevents the generation electrical arcs, for example limiting dissipation voltages to between about zero and sixty volts (preferably between zero and twenty volts).

FIG. 9 is a flowchart illustrating a method 900 for dissipating electrical energy between a fastener 250 and a hole 230. Electrical energy builds up between fastener 250 and hole 230 (step 902). This may occur for example during flight. Next, the built-up electrical energy traverses around coating 510, which covers surface 520 of fastener 250 (step 904). Since coating 510 exhibits a higher dielectric withstand voltage than surface 520, electrical energy passes around coating 510 instead of passing into fastener 250 via coating 510. Next, electrical energy is dissipated between surface 520 of shank 440 and hole 230 (step 906). This action is performed discontinuously along the entire circumference (i.e., the entire 360º) of shank 440 at irregular portions, any may occur at each location that is not coated by coating 510.

In a further embodiment, a sprayer may be calibrated to adjust the size of individual spots/speckles applied to fastener 250. For example, in order to ensure that randomly applied speckles do not substantially vary in terms of the percentage of surface area occupied in a given portion of fastener 250, it may be desirable to select spot sizes that are between approximately one tenth and one thousandth the circumference of fastener 250.

### EXAMPLES

In the following examples, additional processes, systems, and methods are described in the context of a semi-automated titanium pull-type lock bolt fastener installation on the structure of an aircraft.

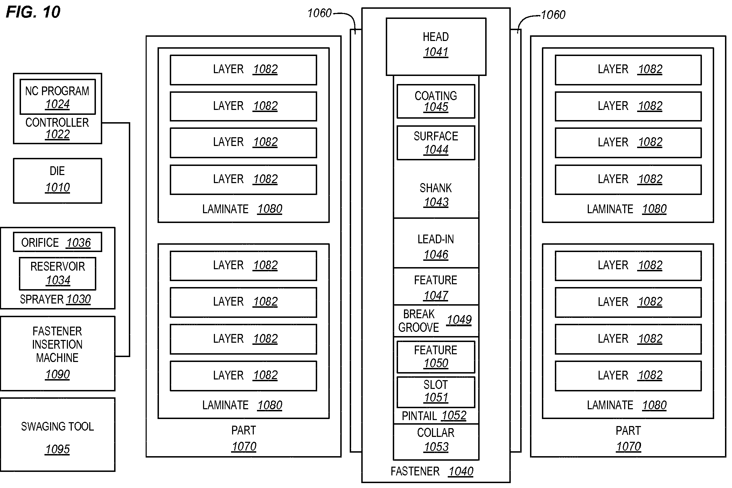

FIG. 10 is a block diagram of a fastener 1040 and accompanying machinery in an exemplary embodiment. Specifically, FIG. 10 illustrates a titanium pull-type lock bolt fastener 1040 which includes head 1041. Fastener 1040 further includes shank 1043, which itself includes surface 1044 (e.g., an anodized or bare metal surface) and high-lubricity coating 1045. Coating 1045 is applied discontinuously, irregularly, and or in a non-uniform fashion (e.g., randomly) upon head 1041 and shank 1043, leaving irregular portions of surface 1044 exposed while other portions of surface 1044 are covered. Coating 1045 application is accomplished during fastener 1040 fabrication using automated spray equipment. Fastener 1040 further includes lead-in transition 1046, which gradually reduces in diameter as it extends from shank 1043 into features 1047 (e.g., threading). Break groove 1049 is also illustrated. Feature 1047 and pintail 1052 are separated by neck/break groove 1049. Pintail 1052 includes feature 1050 (e.g., annular rings) that allow a swaging tool to engage the fastener 1040 and keep the joint clamped during collar 1053 installation and swaging. Pintail 1052 will be broken off after installation of fastener 1040, and pintail 1052 includes feature 1050 as well as slot 1051. Fastener 1040 is covered in lubricant 1060. During installation, collar 1053 will be swaged onto feature 1047, locking fastener 1040 in place.

Further components illustrated in FIG. 10 include parts 1070 comprising laminates 1080 which each comprise individual plies 1082. In some areas, one or more of the structural parts 1070 being joined may be metallic. Assembly equipment may include numerically-controlled drilling and fastener insertion machines 1090 and hand-held fastener insertion tools and swaging tools 1095. Die 1010 (from which fastener 1040 is formed), sprayer 1030 (which applies coating 1045 to shank 1043 by spraying metal pigment coating (e.g., an aluminum-pigmented coating) from reservoir 1034 via orifice 1036), and fastener insertion machine 1090 (which installs fastener 1040) are also illustrated. The operations of fastener insertion machine 1090 and/or sprayer 1030 may be directed by controller 1022 in accordance with a stored NC program 1024.

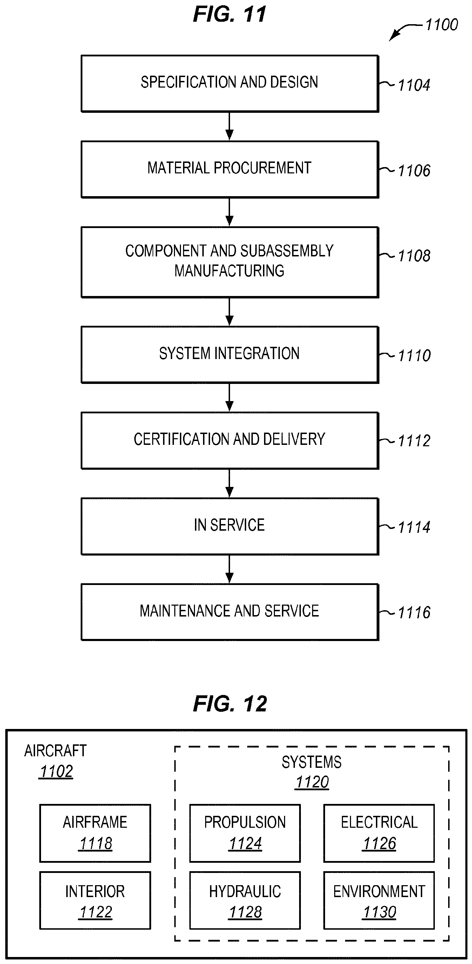

Referring more particularly to the drawings, the present disclosure may be described in the context of an aircraft manufacturing and service method 1100 as shown in FIG. 11 and an aircraft 1102 as shown in FIG. 12. During pre-production, exemplary method 1100 may include specification and design 1104 of the aircraft 1102 and material procurement 1106. During production, component and subassembly manufacturing 1108 and system integration 1110 of the aircraft 1102 takes place. Thereafter, the aircraft 1102 may go through certification and delivery 1112 in order to be placed in service 1114. While in service by a customer, the aircraft 1102 is scheduled for routine maintenance and service 1116 (which may also include modification, reconfiguration, refurbishment, and so on). Apparatus and methods disclosed herein may be employed during any one or more suitable stages of the production and service method 1100 (e.g., specification and design 1104, material procurement 1106, component and subassembly manufacturing 1108, system integration 1110, certification and delivery 1112, service 1114, maintenance and service 1116) and/or any suitable component of aircraft 1102 (e.g., airframe 1118, systems 1120, interior 1122, propulsion 1124, electrical 1126, hydraulic 1128, environmental 1130).

Each of the processes of method 1100 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 12, the aircraft 1102 produced by exemplary method 1100 may include an airframe 1118 with a plurality of systems 1120 and an interior 1122. Examples of high-level systems 1120 include one or more of a propulsion system 1124, an electrical system 1126, a hydraulic system 1128, and an environmental system 1130. Any number of other systems may be included. Although an aerospace example is shown, the principles of the disclosure may be applied to other industries, such as the automotive industry.

As already mentioned above, the present disclosure may be employed during any one or more of the stages of the production and service method 1100. For example, components or subassemblies corresponding to production stage 1108 may be fabricated or manufactured in a manner similar to components or subassemblies produced while the aircraft 1102 is in service. Also, one or more apparatus embodiments, method embodiments, or a combination thereof may be utilized during the production stages 1108 and 1110, for example, by substantially expediting assembly of or reducing the cost of an aircraft 1102. Similarly, one or more of apparatus embodiments, method embodiments, or a combination thereof may be utilized while the aircraft 1102 is in service, for example and without limitation, to maintenance and service 1116. For example, the techniques and systems described herein may be used for steps 1106, 1108, 1110, 1114, and/or 1116, and/or may be used for airframe 1118 and/or interior 1122. These techniques and systems may even be utilized for systems 1120, including for example propulsion 1124, electrical 1126, hydraulic 1128, and/or environmental 1130.

Fastener 250 may secure portions of airframe 1118, and is manufactured during component and subassembly manufacturing 1108. Fastener 250 may then be secured in order to fasten components of airframe 1118 during system integration 1110, and then be utilized in service 1114 until wear renders fastener 250 unusable. Then, in maintenance and service 1116, fastener 250 may be discarded and replaced with a newly manufactured part.

Any of the various control elements (e.g., electrical or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, a control element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

## Claims

1. A method for fastening aircraft components together, comprising:
forming a fit between a fastener (250) and a hole, the fastener (250) comprising:
a head (430);
a cylindrical shank (440) that extends from the head (430) and is dimensioned to engage in a fit with a corresponding hole; and
a discontinuously speckled coating (510), wherein,
the coating (510) exhibits a higher lubricity than a surface of the shank (440), and wherein
the coating (510)exhibits a higher dielectric withstand voltage than the surface of the shank (520),
driving the shank (440) of the fastener (250) into the hole,
building up electrical energy between the shank (440) and the hole,
traversing the electrical energy around the coating (510); and
dissipating the electrical energy at irregular portions of the shank (440) that are not covered by the coating (510), along the entire circumference of the shank (440),
wherein the discontinuously speckled coating (510) is obtained by applying a speckled coating to the fastener (250) in such a way as to leave irregular portions of a surface of the shank (440) exposed and uncovered by the coating.

2. The method of claim 1, whereby the fit is an interference fit formed by selecting the fastener (250) as having a diameter larger than the hole and placing the fastener (250)into the hole.

3. The method of claim 1 or 2, further comprising breaking a pintail (480) off of the fastener (250) after forming the fit and providing a securement (240) on the fastener (250), preferably by way of swaging a collar onto the fastener at a location where the pintail (480) was broken off or by threading a nut onto threads of the fastener.

4. The method of any of the preceding claims, wherein the hole is a hole in a skin of an aircraft.

5. The method of any of the preceding claims, wherein the hole is at a fuel tank of an aircraft.

6. The method of any of the preceding claims, further comprising holding the shank (440) in the hole to prevent rotation of the shank (440) during installation of a nut.

7. The method of any of the preceding claims, wherein driving the shank (440) into the hole comprises shearing the coating (510).

8. The method of any of the preceding claims, wherein dissipating the electrical energy between the hole and the fastener (250) comprises transferring current through the shank (440) at locations on the shank (440) that are anodized.

9. An aircraft fastener (250) comprising:
a head (430);
a cylindrical shank (440) that extends from the head (430) and is dimensioned to engage in a fit with a corresponding hole;
a discontinuously speckled coating (510), wherein,
the coating (510) exhibits a higher lubricity than a surface of the shank (440), and wherein
the coating (510) exhibits a higher dielectric withstand voltage than the surface of the shank, and wherein the discontinuously speckled coating (510)is obtained by applying a speckled coating to the fastener (250) in such a way as to leave irregular portions of a surface of the shank (440) exposed and uncovered by the coating.

10. The aircraft fastener (250) of claim 9, having one or more of the following:
the coating (510) forming an unpatterned mosaic,
the coating (510) leaves irregular, randomly shaped portions of the shank (440) exposed.

11. The aircraft fastener (250) of claim 9 or 10, wherein the coating (510) covers between thirty and seventy percent of a surface area of the shank (440), and/or
the shank (440)is dimensioned to engage in an interference fit with the hole.

12. The aircraft fastener (250) of any of the claims 9-11, wherein:
the fastener (250) further comprises a lead-in transition (450) that extends from the shank (440), and
the lead-in transition (450) exhibits a gradually varying diameter that changes from being equal to a diameter of the shank (440) to being less than the diameter of the shank (440).

13. The aircraft fastener (250) of any of the preceding claims 9-12, wherein the surface of the shank (440) comprises a finish, for example an anodized surface or bare metal, and/or
wherein the shank (440) is made of a material selected from the group consisting of titanium, ferrous alloy, and nickel alloy.

14. The aircraft fastener (250) of any of the preceding claims 9-13, wherein the fastener (250) further comprises a lubricant covering the shank (440) and the coating (510), which lubricant preferably comprises cetyl alcohol, and which lubricant is not firmly adhered to the fastener (250) so that the lubricant acts as a sacrificial lubricant during installation of the fastener (250).

15. The aircraft fastener (250) of any of the preceding claims 9-14, wherein coverage of the surface by the coating increases a width of the shank (440) by less than 0.0254 cm (one hundredth of an inch).

## Patentansprüche

1. Verfahren zum Befestigen von Luftfahrzeugkomponenten aneinander, umfassend:
Ausbilden einer Passung zwischen einem Befestigungsmittel (250) und einer Bohrung, das Befestigungsmittel (250) umfassend:
einen Kopf (430);
einen zylindrischen Schaft (440), der sich von dem Kopf (430) erstreckt und bemessen ist, um in einer Passung mit einer entsprechenden Bohrung einzugreifen; und
eine diskontinuierlich gesprenkelte Beschichtung (510), wobei
die Beschichtung (510) eine höhere Gleitfähigkeit als eine Oberfläche des Schaftes (440) vorweist, und wobei
die Beschichtung (510) eine höhere dielektrische Spannungsfestigkeit als die Oberfläche des Schaftes (520) vorweist,
Eintreiben des Schaftes (440) des Befestigungsmittels (250) in die Bohrung,
Aufbauen von elektrischer Energie zwischen dem Schaft (440) und der Bohrung,
Leiten der elektrischen Energie um die Beschichtung (510) herum; und
Ableiten der elektrischen Energie an unregelmäßigen Abschnitten des Schafts (440), die nicht durch die Beschichtung (510) bedeckt sind, entlang des gesamten Umfangs des Schafts (440),
wobei die diskontinuierlich gesprenkelte Beschichtung (510) durch Aufbringen einer gesprenkelten Beschichtung auf das Befestigungsmittel (250) auf eine Weise erhalten wird, dass unregelmäßige Abschnitte einer Oberfläche des Schafts (440) freiliegend und durch die Beschichtung unbedeckt bleiben.

2. Verfahren nach Anspruch 1, wobei die Passung eine Presspassung ist, die durch Auswählen des Befestigungsmittels (250), das einen größeren Durchmesser als die Bohrung aufweist, und Platzieren des Befestigungsmittels (250) in die Bohrung hinein ausgebildet wird.

3. Verfahren nach Anspruch 1 oder 2, ferner umfassend das Abbrechen eines Drehbolzens (480) von dem Befestigungsmittel (250) nach dem Ausbilden der Passung und Bereitstellen einer Sicherung (240) an dem Befestigungsmittel (250), vorzugsweise durch Verpressung eines Kragens auf das Befestigungsmittel an einer Stelle, an der der Drehbolzen (480) abgebrochen wurde, oder durch Aufschrauben einer Mutter auf das Gewinde des Befestigungsmittels.

4. Verfahren nach einem der vorstehenden Ansprüche, wobei die Bohrung eine Bohrung in der Außenhaut eines Luftfahrzeugs ist.

5. Verfahren nach einem der vorstehenden Ansprüche, wobei die Bohrung an einem Treibstofftank eines Luftfahrzeugs ist.

6. Verfahren nach einem der vorstehenden Ansprüche ferner umfassend ein Halten des Schafts (440) in der Bohrung, um eine Drehung des Schafts (440) während der Installation einer Mutter zu verhindern.

7. Verfahren nach einem der vorstehenden Ansprüche, wobei das Treiben des Schafts (440) in die Bohrung hinein ein Abscheren der Beschichtung (510) umfasst.

8. Verfahren nach einem der vorstehenden Ansprüche, wobei ein Ableiten der elektrischen Energie zwischen der Bohrung und dem Befestigungsmittel (250) ein Übertragen von Strom durch den Schaft (440) an Stellen des Schafts (440) umfasst, die eloxiert sind.

9. Luftfahrzeugbefestigungsmittel (250), umfassend:
einen Kopf (430);
einen zylindrischen Schaft (440), der sich von dem Kopf (430) erstreckt und bemessen ist, um in einer Passung mit einer entsprechenden Bohrung einzugreifen;
eine diskontinuierlich gesprenkelte Beschichtung (510), wobei
die Beschichtung (510) eine höhere Gleitfähigkeit als eine Oberfläche des Schaftes (440) vorweist, und wobei
die Beschichtung (510) eine höhere dielektrische Spannungsfestigkeit als die Oberfläche des Schafts vorweist, und wobei die diskontinuierlich gesprenkelte Beschichtung (510) durch Aufbringen einer gesprenkelten Beschichtung auf das Befestigungsmittel (250) auf eine Weise erhalten wird, dass unregelmäßige Abschnitte einer Oberfläche des Schafts (440) freiliegend und durch die Beschichtung unbedeckt bleiben.

10. Luftfahrzeugbefestigungsmittel (250) nach Anspruch 9, das eines oder mehrere der von Folgendem aufweist:
die Beschichtung (510), die ein musterloses Mosaik ausbildet,
die Beschichtung (510), die unregelmäßige, zufällig geformte Abschnitte des Schaftes (440) freiliegend lässt.

11. Luftfahrzeugbefestigungsmittel (250) nach Anspruch 9 oder 10, wobei die Beschichtung (510) zwischen dreißig und siebzig Prozent eines Oberflächenbereichs des Schaftes (440) bedeckt, und/oder
der Schaft (440) bemessen ist, um mit einer Presspassung in die Bohrung einzugreifen.

12. Luftfahrzeugbefestigungsmittel (250) nach einem der Ansprüche 9 bis 11, wobei:
das Befestigungsmittel (250) ferner einen Einführungsübergang (450) umfasst, der sich von dem Schaft (440) aus erstreckt, und
der Einführungsübergang (450) einen allmählich variierenden Durchmesser aufweist, der sich von gleich einem Durchmesser des Schafts (440) zu kleiner als einem Durchmesser des Schafts (440) ändert.

13. Luftfahrzeugbefestigungsmittel (250) nach einem der vorstehenden Ansprüche 9 bis 12, wobei die Oberfläche des Schafts (440) eine Oberflächenbehandlung umfasst, zum Beispiel eine eloxierte Oberfläche oder blankes Metall, und/oder
wobei der Schaft (440) aus einem Material gefertigt ist, das aus der Gruppe ausgewählt ist, bestehend aus Titan, einer Eisenlegierung und einer Nickellegierung.

14. Luftfahrzeugbefestigungsmittel (250) nach einem der vorstehenden Ansprüche 9 bis 13, wobei das Befestigungsmittel (250) ferner ein Schmiermittel, das den Schaft (440) und die Beschichtung (510) bedeckt, umfasst, wobei das Schmiermittel vorzugsweise Cetylalkohol umfasst, und wobei das Schmiermittel nicht fest an dem Befestigungsmittel (250) haftet, so dass das Schmiermittel als ein Opferschmiermittel während der Installation des Befestigungsmittels (250) wirkt.

15. Luftfahrzeugbefestigungsmittel (250) nach einem der vorstehenden Ansprüche 9 bis 14, wobei die Abdeckung der Oberfläche durch die Beschichtung eine Breite des Schafts (440) um weniger als 0,0254 cm (ein Hundertstel Zoll) vergrößert.

## Revendications

1. Procédé de fixation de composants d'aéronefs, comprenant :
la formation d'un ajustement entre un élément de fixation (250) et un trou, l'élément de fixation (250) comprenant :
une tête (430) ;
une tige cylindrique (440) qui s'étend à partir de la tête (430) et qui est dimensionnée pour venir en prise avec un ajustement d'un trou correspondant ; et
un revêtement moucheté discontinu (510), dans lequel,
le revêtement (510) présente un pouvoir lubrifiant plus élevé que la surface de la tige (440),
et dans lequel
le revêtement (510) présente une tension de tenue diélectrique plus élevée que la surface de la tige (520),
en enfonçant la tige (440) de l'élément de fixation (250) dans le trou,
en accumulant de l'énergie électrique entre la tige (440) et le trou,
en faisant circuler l'énergie électrique autour du revêtement (510) ; et
en dissipant l'énergie électrique dans les parties irrégulières de la tige (440) qui ne sont pas couvertes par le revêtement (510), sur toute la circonférence de la tige (440),
dans lequel le revêtement moucheté discontinu (510) est obtenu en appliquant un revêtement moucheté à l'élément de fixation (250) de manière à laisser des parties irrégulières d'une surface de la tige (440) exposées et non couvertes par le revêtement.

2. Procédé selon la revendication 1, selon lequel l'ajustement est un ajustement avec serrage formé en sélectionnant l'élément de fixation (250) comme ayant un diamètre plus grand que le trou et en plaçant l'élément de fixation (250) dans le trou.

3. Procédé selon la revendication 1 ou 2, comprenant en outre le détachement d'une broche (480) de l'élément de fixation (250) après la formation de l'ajustement et la fourniture d'une fixation (240) sur l'élément de fixation (250), de préférence au moyen d'un collet sur l'élément de fixation à l'endroit où la broche (480) a été détachée ou en vissant un écrou sur les filets de l'élément de fixation.

4. Procédé selon l'une quelconque des revendications précédentes, dans lequel le trou est un trou dans le revêtement d'un avion.

5. Procédé selon l'une quelconque des revendications précédentes, dans lequel le trou se trouve dans un réservoir de carburant d'un avion.

6. Procédé selon l'une quelconque des revendications précédentes, comprenant en outre le maintien de la tige (440) dans le trou pour empêcher la rotation de la tige (440) pendant l'installation d'un écrou.

7. Procédé selon l'une quelconque des revendications précédentes, dans lequel l'enfoncement de la tige (440) dans le trou comprend le cisaillement du revêtement (510).

8. Procédé selon l'une quelconque des revendications précédentes, dans lequel la dissipation de l'énergie électrique entre le trou et l'élément de fixation (250) consiste à transférer le courant à travers la tige (440) à des endroits de la tige (440) qui sont anodisés.

9. Élément de fixation d'avion (250) comprenant :
une tête (430) ;
une tige cylindrique (440) qui s'étend à partir de la tête (430) et qui est dimensionnée pour venir en prise avec un ajustement d'un trou correspondant ;
un revêtement moucheté discontinu (510), dans lequel,
le revêtement (510) présente un pouvoir lubrifiant plus élevé que la surface de la tige (440), et dans lequel
le revêtement (510) présente une tension de tenue diélectrique plus élevée que la surface de la tige, et dans lequel le revêtement moucheté discontinu (510) est obtenu en appliquant un revêtement moucheté à l'élément de fixation (250) de manière à laisser des parties irrégulières d'une surface de la tige (440) exposées et non couvertes par le revêtement.

10. Élément de fixation d'avion (250) selon la revendication 9, comportant un ou plusieurs des éléments suivants :
le revêtement (510) formant une mosaïque sans motif,
le revêtement (510) laisse des parties de la tige (440) exposées de manière irrégulière et aléatoire.

11. Élément de fixation d'avion (250) selon la revendication 9 ou 10, dans lequel le revêtement (510) couvre entre trente et soixante-dix pour cent de la surface de la tige (440), et/ou
la tige (440) est dimensionnée pour venir en prise avec un ajustement serré du trou.

12. Élément de fixation d'avion (250) selon l'une quelconque des revendications 9 à 11, dans lequel :
l'élément de fixation d'avion (250) comprend en outre une transition d'entrée (450) qui s'étend à partir de la tige (440), et
la transition d'entrée (450) présente un diamètre qui varie progressivement, passant d'un diamètre égal à celui de la tige (440) à un diamètre inférieur à celui de la tige (440).

13. Élément de fixation d'avion (250) selon l'une quelconque des revendications 9 à 12 précédentes, dans lequel la surface de la tige (440) comprend une finition, par exemple une surface anodisée ou un métal nu, et/ou
dans lequel la tige (440) est faite d'un matériau choisi dans le groupe constitué par le titane, l'alliage ferreux et l'alliage de nickel.

14. Élément de fixation d'avion (250) selon l'une quelconque des revendications 9 à 13 précédentes, dans lequel l'élément de fixation (250) comprend en outre un lubrifiant recouvrant la tige (440) et le revêtement (510), lequel lubrifiant comprend de préférence de l'alcool cétylique, et lequel lubrifiant n'adhère pas fermement à l'élément de fixation (250) de sorte que le lubrifiant agit comme un lubrifiant sacrificiel pendant l'installation de l'élément de fixation (250).

15. Élément de fixation d'avion (250) selon l'une quelconque des revendications 9 à 14 précédentes, dans lequel la couverture de la surface par le revêtement augmente la largeur de la tige (440) de moins de 0,0254 cm (un centième de pouce).
